# EUROPÄISCHE PATENTSCHRIFT

(11) **EP 3 034 901 B1**
(45) Veröffentlichungstag und Bekanntmachung des Hinweises auf die Patenterteilung: **21.10.2020**
(21) Anmeldenummer: 14199394.9
(22) Anmeldetag: 19.12.2014
(51) Int. Cl.: F16D 21/06, F16D 13/68

(54) **Kupplungsanordnung für Kraftfahrzeugantriebsstrang**
Coupling assembly for motor vehicle drive train
Système d'embrayage pour une chaîne cinématique de véhicule automobile

(43) Veröffentlichungstag der Anmeldung: 22.06.2016
(73) Patentinhaber: Magna PT B.V. & Co. KG, 74199 Untergruppenbach (DE)
(72) Erfinder: Gremplini, Hansi, 74379 Ingersheim (DE); Cokdogru, Inan, 74924 Neckarsbischofsheim (DE); Schaarschmidt, Reinhard, 75428 Illingen (DE); Stark, Timo, 74229 Oedheim (DE); Wolf, Thomas, 71640 Ludwigsburg (DE); Bellinger, Gerhard, 69242 Muehlhausen (DE); Neuendorf, Jens, 74199 Untergruppenbach (DE); Nuffer, Cedric, 74199 Unterheinriet (DE)
(74) Vertreter: Rausch, Gabriele

(56) Entgegenhaltungen:
- EP-A1- 2 182 235
- EP-A2- 1 840 400
- DE-A1- 10 115 453
- DE-A1-102009 012 283
- DE-A1-102010 051 911

## Beschreibung

Die vorliegende Erfindung betrifft eine Kupplungsanordnung für einen Kraftfahrzeugantriebsstrang, mit einem Antriebsglied, das mit einem Antriebsmotor verbindbar ist, mit einem Antriebslamellenträger, der eine Antriebslamellenträgerverzahnung aufweist und drehfest mit dem Antriebsglied verbunden ist, mit einer Mehrzahl von Antriebslamellen, die drehfest mit dem Antriebslamellenträger verbunden sind, mit einem Abtriebslamellenträger, der eine Abtriebslamellenträgerverzahnung aufweist und drehfest mit einer Abtriebswelle verbindbar ist, und mit einer Mehrzahl von Abtriebslamellen, die drehfest mit dem Abtriebslamellenträger verbunden sind, wobei ein erster Antriebsgliedabschnitt des Antriebsgliedes in axialer Richtung zwischen einer ersten Antriebslamelle der Antriebslamellen und einem Sicherungsring angeordnet ist.

Derartige Kupplungsanordnungen werden beispielsweise in Kraftfahrzeugantriebssträngen verwendet, die ein Doppelkupplungsgetriebe aufweisen. In diesem Fall kann die Kupplungsanordnung eine Doppelkupplungsanordnung sein. Hierbei ist ein Antriebsglied mit zwei Antriebslamellenträgern von jeweiligen Reibkupplungen verbunden, die jeweils als Lamellenkupplungen ausgebildet sind. Das Antriebsglied kann mit einem Antriebsmotor wie einem Verbrennungsmotor, einer Hybrid-Antriebseinheit, einem Elektromotor oder dergleichen verbunden sein.

Mit derartigen Lamellenkupplungen, deren Lamellen sich durch einen Aktuator wie einen Hydraulikzylinder zusammendrücken lassen, kann eine feinfühlige Regelung des über die jeweilige Lamellenkupplung übertragenen Drehmomentes erzielt werden. Bei Doppelkupplungsgetrieben erfolgen Gangwechsel, indem ausgehend von einer Quellgangstufe in einem Teilgetriebe und einer vorab eingelegten Zielgangstufe in dem anderen Teilgetriebe die zwei Reibkupplungen in überschneidender Art und Weise betätigt werden, so dass keine Zugkraftunterbrechung auftritt. Die Lamellenkupplungen werden dabei vorzugsweise von voneinander unabhängigen Aktuatoren betätigt.

Das Lamellenpaket beinhaltet zum einen Antriebslamellen und zum anderen Abtriebslamellen, die verschachtelt ineinandergreifen. Das Lamellenpaket wird auf einer axialen Seite abgestützt und von der anderen axialen Seite mittels des Aktuators betätigt.

Ein Doppelkupplungsaufbau, bei dem ein Antriebsgliedabschnitt eine axiale Abstützung für das Lamellenpaket bereitstellt, ist aus dem Dokument DE 10 2008 027 073 A1 bekannt geworden. Das Antriebsglied ist dabei als Mitnehmerplatte ausgebildet, die mit einer Eingangswelle verbunden ist. Ein radial äußerer Abschnitt der Mitnehmerplatte ist drehfest mit einem Außenlamellenträger einer radial äußeren Lamellenkupplung verbunden. Das Antriebsglied weist einen ringförmigen, in axialer Richtung vorstehenden Vorsprung auf, an dem sich das Lamellenpaket abstützt. In dem Dokument wird vorgeschlagen, dass eine zu dem Antriebsglied benachbarte Lamelle axial dünner ist als andere Antriebslamellen der radial äußeren Kupplung. Hierdurch soll eine mögliche Senkung von Temperaturen im Reibkontaktbereich bei gleichzeitiger gleichmäßiger Flächenpressungsverteilung und einer kürzeren axialen Baulänge erreicht werden.

Aus dem Dokument DE 10 2007 058 186 A1 ist eine Lamellenkupplung bekannt, bei der zwischen einem Antriebsglied, das einstückig mit einem Antriebslamellenträger ausgebildet ist, und dem Lamellenpaket ein Pendelring angeordnet ist, der mit dem Lamellenpaket zusammenwirkt und der bezüglich einer Normalebene zu der Rotationsachse der Kupplung schwenkbar ist, um einen Ausgleich einer in Umfangsrichtung variierenden Dicke der Kupplungslamellen zu ermöglichen.

Das Dokument EP 1 726 842 A1 offenbart eine Kupplungsanordnung mit einer radial äußeren und einer radial inneren Lamellenkupplung, die einen gemeinsamen Lamellenträger haben, wobei zur axialen Abstützung beider Lamellenkupplungen eine gemeinsame Endscheibe vorgesehen ist.

Schließlich offenbart das Dokument DE 10 2004 013 265 A1 eine Doppelkupplung mit zwei Lamellenkupplungen, wobei in axialer Richtung zwischen einem Antriebsglied und einem radial äußeren Lamellenpaket ein Ring angeordnet ist. Dieser dient vermutlich zur axialen Abstützung des Lamellenpaketes. In manchen Ausführungsformen ist der Antriebslamellenträger einstückig mit dem Antriebsglied verbunden, in anderen Ausführungsformen sind das Antriebsglied und der Antriebslamellenträger miteinander über eine Verzahnung drehfest verbunden.

Bei einer Doppelkupplungsanordnung, wie sie beispielhaft in dem Dokument DE 10 2008 027 073 A1 offenbart ist, kann es im Betrieb zu Taumelbewegungen des Antriebsgliedes kommen, was zu Längsschwingungen des Fahrzeugs führen kann, das mit einer solchen Kupplungsanordnung ausgestattet ist.

Das Dokument DE 101 15 453 A1 offenbart eine Doppelkupplungsanordnung mit einer Torsionsschwingeranordnung und Halteringen, welche die Relativlage zwischen Antriebslamellenträger und Antriebsglied fixieren, und die Merkmale des Oberbegriffs von Anspruch 1 zeigt.

Es ist vor diesem Hintergrund eine Aufgabe der Erfindung, eine Kupplungsanordnung anzugeben, die konstruktiv günstig aufgebaut ist und bei der Längsschwingungen des Fahrzeugs aufgrund einer Taumelbewegung des Antriebsgliedes vermieden oder zumindest gelindert werden können.

Diese Aufgabe wird bei der eingangs genannten Kupplungsanordnung dadurch gelöst, dass eine Lagestabilisierungseinrichtung auf der dem Sicherungsring entgegengesetzten Seite des Antriebsgliedes angreift, um die Relativlage zwischen dem Antriebslamellenträger und dem Antriebsglied zu stabilisieren.

Mit der erfindungsgemäßen Kupplungsanordnung kann erreicht werden, dass Taumelbewegungen des Antriebsgliedes in bestimmten Betriebssituationen verhindert oder zumindest verringert werden können, so dass der Komfort während des Fahrens eines derart ausgestatteten Kraftfahrzeuges erhöht werden kann.

Der Sicherungsring ist vorzugsweise axial an dem Antriebslamellenträger fixiert. Hierbei kann der Sicherungsring beispielsweise in Ausnehmungen des Antriebslamellenträgers eingreifen. Der Sicherungsring kann in einigen Varianten ein offener Ring sein, kann in anderen Varianten jedoch auch ein geschlossener Ring sein. Das Antriebsglied wird mittels des Axialsicherungsringes in einer ersten axialen Richtung gesichert.

Die Lagestabilisierungseinrichtung dient vorzugsweise dazu, das Antriebsglied auch in der entgegengesetzten zweiten axialen Richtung in Bezug auf den Antriebslamellenträger zu sichern. Vorzugsweise wird folglich das Antriebsglied in beiden entgegengesetzten axialen Richtungen an dem Antriebslamellenträger sicher festgelegt. Hierdurch können Taumelbewegungen des Antriebsgliedes verhindert oder verringert werden.
Ferner ist es vorteilhaft, dass die Lagestabilisierungseinrichtung wenigstens einen Axialsicherungshaken aufweist, der fest mit dem Sicherungsring verbunden ist.

Bei der erfindungsgemäßen Ausführungsform erfolgt die Lagestabilisierung über den Sicherungsring . Dies ist in mehrerer Hinsicht vorteilhaft. In dem Antriebslamellenträger über die axiale Länge und/oder über den Umfang verteilt angeordnete Fluidöffnungen können gegenüber Varianten des Standes der Technik unverändert verbleiben und folglich im Betrieb für eine optimale Durchströmung des Lamellenpaketes mit Fluid sorgen. Die Antriebslamellen und/oder die Abtriebslamellen können vorzugsweise gegenüber dem Stand der Technik unverändert verbleiben. Die Lamellen können insbesondere am Außenumfang über eine einheitliche, ununterbrochene Verzahnung verfügen, über die die drehfeste Anbindung an dem jeweiligen Lamellenträger realisierbar ist.

Der Axialsicherungshaken ist vorzugsweise einstückig mit dem Sicherungsring ausgebildet.

Der Axialsicherungshaken erstreckt sich vorzugsweise axial und hintergreift vorzugsweise die den Lamellen zugewandte axiale Seite des Antriebsgliedes. Vorzugsweise ist eine Mehrzahl von Axialsicherungshaken über den Umfang des Sicherungsringes verteilt ausgebildet. Die Anzahl der Haken kann beispielsweise in einem Bereich von 2 bis 10 liegen, insbesondere in einem Bereich von 2 bis 6.

Die Aufgabe wird somit vollkommen gelöst.

Gemäß einer besonders bevorzugten Ausführungsform weist das Antriebsglied einen zweiten Antriebsgliedabschnitt auf, gegen den die erste Antriebslamelle andrückbar ist, wenn die Antriebs- und die Abtriebslamellen zusammengedrückt werden.

Der zweite Antriebsgliedabschnitt bildet folglich eine axiale Abstützung für das Lamellenpaket, wobei ein Aktuator auf einer entgegengesetzten axialen Seite an dem Lamellenpaket aus Antriebslamellen und Abtriebslamellen angreift, um das Lamellenpaket bedarfsweise zusammenzudrücken, wenn ein Drehmoment zu übertragen ist.

Vorzugsweise ist der Sicherungsring folglich so ausgebildet, dass das Antriebsglied in beiden entgegengesetzten axialen Richtungen in Bezug auf den Sicherungsring gesichert ist.

Vorzugsweise ergibt sich folglich eine spielfreie Montage des Antriebsgliedes an dem Sicherungsring. Bei dieser Ausführungsform ist der Sicherungsring vorzugsweise ein geschlossener Ring.

Dabei ist es besonders bevorzugt, wenn eine Zahnbreite einer Antriebsgliedverzahnung in Umfangsrichtung verkürzt ist, wobei der Axialsicherungshaken durch eine Zahnlücke der Antriebsgliedverzahnung hindurchgreift.

Durch die Verkürzung der Zahnbreite von Zähnen der Antriebsgliedverzahnung können jeweilige Zahnlücken dazwischen breiter ausgeführt sein als jeweilige Zähne einer Verzahnung des Antriebslamellenträgers. Diese größere Zahnlücke kann dazu verwendet werden, um den Axialsicherungshaken in axialer Richtung auf die dem Sicherungsring entgegengesetzte axiale Seite des ersten Antriebsgliedabschnittes zu führen. Dies kann dazu verwendet werden, um das Antriebsglied in Bezug auf den Sicherungsring axial beidseitig zu fixieren. Der oder die Axialsicherungshaken kann bzw. können bei einer Montage dabei in Umfangsrichtung ausgelenkt werden. Alternativ ist es denkbar, den Sicherungsring an dem Antriebsglied zu montieren, bevor der Antriebslamellenträger in Bezug auf das Antriebsglied montiert wird.

Ferner ist es vorteilhaft, wenn der Sicherungsring ferner wenigstens eine Tangentialsicherungsnase aufweist.

Die Tangentialsicherungsnase greift vorzugsweise ebenfalls in Zahnlücken der Antriebsgliedverzahnung ein und sorgt dafür, dass der Sicherungsring und das Antriebsglied im montierten Zustand auch in Umfangsrichtung fest miteinander gekoppelt sind. Die Tangentialsicherungsnase füllt dabei die Zahnlücken dort aus, wo kein Axialsicherungshaken vorhanden ist. Vorzugsweise wird mit der Tangentialsicherungsnase bzw. einer Mehrzahl solcher Tangentialsicherungsnasen eine radiale Verklemmung erzielt, die vorzugsweise kein Radialspiel aufweist. Hierdurch ergibt sich die vorteilhafte Wirkung, dass die Kupplungsanordnung weniger anfällig für aufgeprägte Schwingungen ist.

Während die Anzahl der Axialsicherungshaken beispielsweise im Bereich von 2 bis 6 liegen kann, insbesondere bei 4, kann die Anzahl der jeweils zwischen zwei Axialsicherungshaken in Umfangsrichtung angeordneten Tangentialsicherungsnasen in einem Bereich von 5 bis 20 liegen, insbesondere in einem Bereich von 6 bis 18.

Wie oben erwähnt, ist es ferner bevorzugt, wenn der Sicherungsring bei dieser Ausführungsform als geschlossener Ring ausgebildet ist.

Hierdurch kann der Sicherungsring Sicherungsfunktionen sowohl in beiden axialen Richtungen als auch in Umfangsrichtung erfüllen, insbesondere in Verbindung mit den Axialsicherungshaken und/oder den Tangentialsicherungsnasen.

Gemäß einer weiteren bevorzugten Ausführungsform weist die Lagestabilisierungseinrichtung eine Mehrzahl von Vorsprüngen auf, die an dem Antriebslamellenträger ausgebildet und über den Umfang des Antriebslamellenträgers verteilt angeordnet sind.

Die Vorsprünge sind dabei vorzugsweise einstückig mit dem Antriebslamellenträger ausgebildet. Die Anzahl der Vorsprünge, die über den Umfang verteilt angeordnet sind, ist vorzugsweise kleiner als 16, insbesondere kleiner als 12. Die Vorsprünge können jeweils gegenüber einer Kontur des Antriebslamellenträgers radial nach innen gedrückt sein, wo die Vorsprünge einen Axialanschlag für den ersten Antriebsgliedabschnitt bilden, der dann von der entgegengesetzten axialen Seite mittels des Sicherungsringes sicherbar ist. Auch bei dieser Variante kann folglich das Antriebsglied in beiden axialen Richtungen in Bezug auf den Antriebslamellenträger axial gesichert sein, so dass Taumelbewegungen verhindert oder verringert werden können.

Gemäß einer bevorzugten Ausführungsform sind die Vorsprünge dabei im Bereich von Zahnlücken oder im Bereich von Zähnen der Antriebslamellenträgerverzahnung ausgebildet.

Eine Ausbildung der Vorsprünge im Bereich von Zahnlücken ist dabei besonders bevorzugt.

Ferner ist es hierbei vorteilhaft, wenn die Vorsprünge jeweils durch eine Radialnase gebildet sind, die an einer sich in Längsrichtung erstreckenden Zunge ausgebildet ist, die durch Einschnitte in dem Antriebslamellenträger ausgebildet ist.

Dabei kann die Radialnase an einem freien Zungenende abgebogen sein, wobei das Zungenende entweder hin zu dem Antriebsglied weist oder von dem Antriebsglied weg weist.

Alternativ hierzu ist es möglich, dass die Vorsprünge jeweils durch eine geprägte Radialnase gebildet sind, die durch Umformen von Material des Antriebslamellenträgers hergestellt ist.

Eine derartige geprägte Radialnase kann ohne Einschnitte in dem Antriebslamellenträger ausgebildet sein, beispielsweise als Radialnase im Bereich einer Zahnlücke einer Antriebslamellenträgerverzahnung. Denkbar ist es jedoch auch, dass vor dem Prägen einer solchen Radialnase entsprechende Einschnitte in dem Antriebslamellenträger ausgebildet sind, die beispielsweise als kurze, in Umfangsrichtung verlaufende parallele Schnitte ausgebildet sind. Natürlich ist es jedoch auch möglich, dass zwei parallele Einschnitte zur Vorbereitung eines Prägeschrittes nicht in Umfangsrichtung verlaufen, sondern parallel zur Axialrichtung. Die parallelen Schnitte sind hierbei vorzugsweise nicht miteinander verbunden.

Ferner ist es insgesamt vorteilhaft, wenn die Lagestabilisierungseinrichtung einen zweiten Sicherungsring aufweist, der axial an dem Antriebslamellenträger festgelegt ist und der auf der dem ersten Sicherungsring entgegengesetzten axialen Seite an dem Antriebsglied angreift.

Der zweite Sicherungsring kann vorzugsweise als offener Ring ausgebildet sein. Der zweite Sicherungsring liegt außenumfänglich zumindest abschnittsweise in Ausnehmungen des Antriebslamellenträgers, um an dem Antriebslamellenträger axial festgelegt zu werden.

Dabei ist es bevorzugt, wenn der Antriebslamellenträger im Bereich eines Zahnes der Antriebslamellenträgerverzahnung eine radial nach außen gerichtete Ausstülpung aufweist, in die der zweite Sicherungsring greift.

Eine derartige Ausstülpung kann in ähnlicher Weise ausgebildet sein wie die oben beschriebenen Vorsprünge, die vorzugsweise radial nach innen gerichtet sind. Im Gegensatz hierzu sind die geprägten Haltenasen vorzugsweise radial nach außen geprägt, um auf diese Weise eine Axialsicherungsmöglichkeit für den zweiten Sicherungsring zu realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 : eine schematische Darstellung eines Kraftfahrzeugantriebsstranges mit einer Längsschnittansicht durch eine Ausführungsform einer erfindungsgemäßen Kupplungsanordnung;
Fig. 2 : eine perspektivische Teilansicht der Kupplungsanordnung der Fig. 1 ;
Fig. 3 : eine perspektivische Darstellung eines Sicherungsringes der Kupplungsanordnung der Fig. 1 und 2 ;
Fig. 4 : eine perspektivische Darstellung der Kupplungsanordnung der Fig. 1 und 2 , jedoch ohne Sicherungsring und ohne Antriebslamellenträger;
Fig. 5 : eine der Fig. 4 vergleichbare Ansicht, jedoch mit Sicherungsring;
Fig. 6 : eine der Fig. 5 vergleichbare Darstellung, jedoch mit Antriebslamellenträger;
Fig. 7 : eine schematische Längsschnittansicht durch eine weitere Ausführungsform einer erfindungsgemäßen Kupplungsanordnung;
Fig. 8 : eine perspektivische Teilansicht des Antriebslamellenträgers der Kupplungsanordnung der Fig. 7 ;
Fig. 9 : eine schematische Detailansicht einer Antriebslamelle der Kupplungsanordnung der Fig. 7 ;
Fig. 10 : eine der Fig. 7 vergleichbare Darstellung einer weiteren Ausführungsform einer erfindungsgemäßen Kupplungsanordnung;
Fig. 11 : eine der Fig. 8 vergleichbare Darstellung einer weiteren Ausführungsform eines Antriebslamellenträgers der Kupplungsanordnung der Fig. 10 ;
Fig. 12 : eine der Fig. 7 vergleichbare Darstellung einer weiteren Ausführungsform einer erfindungsgemäßen Kupplungsanordnung;
Fig. 13 : eine der Fig. 7 vergleichbare Darstellung einer weiteren Ausführungsform einer erfindungsgemäßen Kupplungsanordnung; und
Fig. 14 : eine der Fig. 7 vergleichbare Darstellung einer weiteren Ausführungsform einer erfindungsgemäßen Kupplungsanordnung.

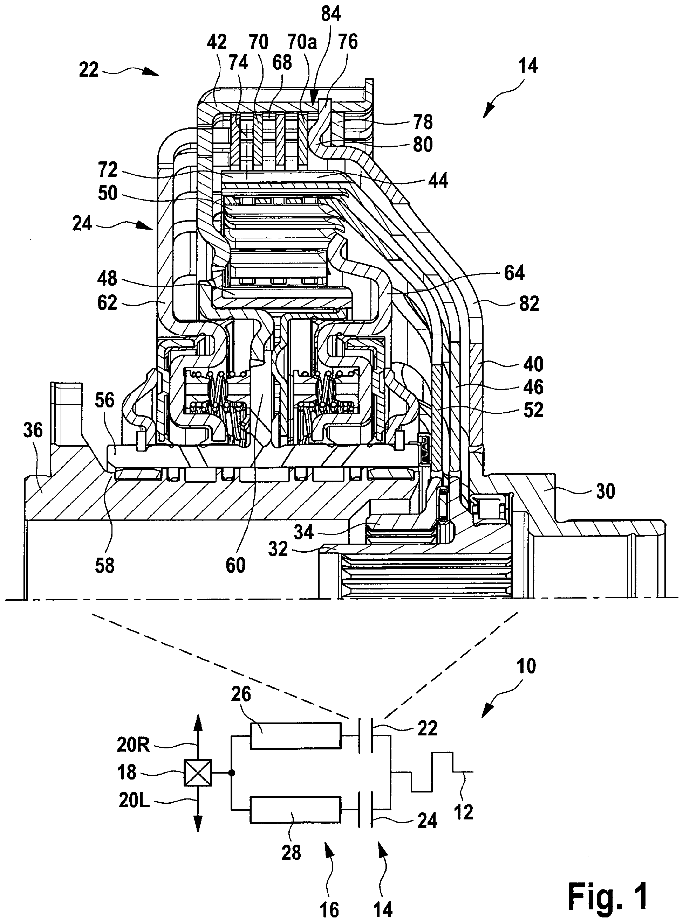

In Fig. 1 ist ein Antriebsstrang für ein Kraftfahrzeug schematisch dargestellt und generell mit 10 bezeichnet. Der Antriebsstrang 10 weist einen Antriebsmotor 12 auf, dessen Antriebswelle mit einem Antriebsglied einer Doppelkupplungsanordnung 14 verbunden ist. Der Antriebsstrang beinhaltet ferner eine Getriebeanordnung 16, deren Ausgang mit einem Differential 18 verbunden ist, mittels dessen Antriebsleistung auf angetriebene Räder 20L, 20R verteilbar ist.

Die Doppelkupplungsanordnung 14 weist eine erste Reibkupplung 22 und eine zweite Reibkupplung 24 auf. Die Reibkupplung 22, 24 weisen ein gemeinsames Antriebsglied auf. Ein Ausgangsglied der ersten Reibkupplung ist mit einem ersten Teilgetriebe 26 der Getriebeanordnung 16 verbunden. Ein Ausgangsglied der zweiten Reibkupplung 24 ist mit einem Eingang eines zweiten Teilgetriebes 28 der Getriebeanordnung 16 verbunden. Dem ersten Teilgetriebe 26 sind beispielsweise ungerade Gangstufen der Getriebeanordnung zugeordnet, und dem zweiten Teilgetriebe 28 sind beispielsweise gerade Gangstufen der Getriebeanordnung 16 zugeordnet. Die Doppelkupplungsanordnung 14 und die Getriebeanordnung 16 bilden ein Doppelkupplungsgetriebe, dessen Funktionsweise generell bekannt ist. Durch überschneidende Betätigung der zwei Reibkupplungen 22, 24 können Gangwechsel ohne Zugkraftunterbrechung durchgeführt werden.

Fig. 1 zeigt eine Ausführungsform einer Kupplungsanordnung 14, die in dem Antriebsstrang 10 verwendbar ist. Die Kupplungsanordnung 14 weist eine Eingangswelle 30 auf, die mit dem Antriebsmotor 12 verbindbar ist, beispielsweise mit einer Kurbelwelle, mit einer Elektromotorantriebswelle, etc.

Ferner weist die Kupplungsanordnung 14 eine erste Ausgangswelle 32 auf, die beispielsweise mit dem Eingang des ersten Teilgetriebes 26 verbindbar ist, sowie eine zweite Ausgangswelle 34, die beispielsweise mit dem Eingang des zweiten Teilgetriebes 28 verbindbar ist.

Die Kupplungsanordnung 14 beinhaltet ferner einen gehäusefesten hohlen Zapfen 36, durch den hindurch sich Eingangswellen der Teilgetriebe 26, 28 erstrecken können, um mit den Ausgangswellen 32, 34 verbunden zu werden.

Ferner beinhaltet die Kupplungsanordnung 14 ein Antriebsglied 40 in Form einer runden Mitnehmerscheibe ("drive plate"). Das Antriebsglied 40 ist fest bzw. starr mit der Eingangswelle 30 verbunden, und zwar an einem radial inneren Abschnitt hiervon. Ein radial äußerer Abschnitt des Antriebsgliedes 40 ist mit einem Außenlamellenträger 42 der ersten Reibkupplung 22 verbunden. Ein Innenlamellenträger 44 der ersten Reibkupplung 22 ist mit der ersten Ausgangswelle 32 verbunden, und zwar über ein erstes Abtriebsglied 46, das axial unmittelbar benachbart zu dem Antriebsglied 40 angeordnet ist.

Der Außenlamellenträger 42 der ersten Reibkupplung 22 ist mit einem Innenlamellenträger 48 der zweiten Reibkupplung 24 starr verbunden. Ein Außenlamellenträger 50 der zweiten Reibkupplung 24 ist radial innerhalb des Innenlamellenträgers 44 der ersten Reibkupplung 22 angeordnet und ist über ein zweites Abtriebsglied 52 mit der zweiten Ausgangswelle 34 verbunden. Das zweite Abtriebsglied 52 ist axial benachbart zu dem ersten Abtriebsglied 46 angeordnet.

Die erste Reibkupplung 22 ist radial außerhalb der zweiten Reibkupplung 24 angeordnet. Der Außenlamellenträger 42 und der Innenlamellenträger 48 bilden jeweils Antriebslamellenträger der Reibkupplungen 22 bzw. 24.

Die Kupplungsanordnung 14 weist ferner eine Nabe 56 auf, die drehbar in Bezug auf den Zapfen 36 gelagert ist. Zwischen der Nabe 56 und dem gehäusefesten Zapfen 36 ist eine Drehdurchführung 58 ausgebildet, mittels der Hydraulikfluid zugeführt werden kann. Beispielsweise kann über einen nicht näher bezeichneten Drehdurchführungskanal Schmier- und Kühlfluid für die Reibkupplungen 22, 24 zugeführt werden. Über einen weiteren nicht näher bezeichneten Kanal kann beispielsweise Hydraulikfluid zum Betätigen der ersten Reibkupplung 22 zugeführt werden, und über einen weiteren Kanal Hydraulikfluid zum Betätigen der zweiten Reibkupplung 24.

Die Nabe 56 ist drehfest mit einem Radialsteg 60 verbunden, an dessen radial äußerem Abschnitt die fest miteinander verbundene Anordnung aus Außenlamellenträger 42 und Innenlamellenträger 48 der Reibkupplungen 22 bzw. 24 festgelegt ist. Mit anderen Worten ist die Nabe 56 drehfest mit dem Antriebsglied 40 verbunden.

An dem Außenumfang der Nabe 56 sind ferner ein erster Aktuator mit einem ersten Kolben 62 und ein zweiter Aktuator mit einem zweiten Kolben 64 angeordnet. Die Kolben 62, 64 sind auf axial entgegengesetzten Seiten des Radialsteges 60 angeordnet. Der erste Kolben 62 kann hydraulisch so versetzt werden, dass er ein Lamellenpaket der ersten Reibkupplung 22 in Richtung hin zu der Antriebsseite (in Richtung hin zu der Eingangswelle 30) andrückt. Der zweite Kolben 64 kann hydraulisch in die entgegengesetzte Richtung betätigt werden, um ein Lamellenpaket der zweiten Reibkupplung 24 in eine Richtung von dem Kupplungseingang weg anzudrücken, und zwar in Richtung weg von der Eingangswelle 30.

Die Kolben 62, 64 sind axial verschieblich in Bezug auf die Nabe 56 gelagert und in an sich bekannter Weise durch Fluid betätigbar, das in Zylinderräume einführbar ist. Die Kolben 62, 64 sind in entgegengesetzte axiale Richtungen mittels nicht näher bezeichneter Federn vorgespannt, und zwar jeweils von dem Radialsteg 60 weg, derart, dass die Reibkupplungen 22, 24 jeweils normalerweise offene Reibkupplungen sind ("normally open").

Der Außenlamellenträger 42 weist an seinem Innenumfang eine Außenlamellenträgerverzahnung 68 auf, in die außenumfängliche Zähne von Antriebslamellen 70 greifen. Der Innenlamellenträger 44 weist in entsprechender Weise eine Außenverzahnung 72 auf, in die Verzahnungen von Abtriebslamellen 74 greifen. Die Antriebslamellen 70 und die Abtriebslamellen 74 bilden ein Lamellenpaket, wobei die Antriebslamellen 70 und die Abtriebslamellen 74 abwechselnd angeordnet sind. Das hieraus gebildete Lamellenpaket ist zwischen dem Antriebsglied 40 und dem ersten Kolben 62 angeordnet. Das Antriebsglied 40 weist einen ersten Antriebsgliedabschnitt 76 auf, der über eine Verzahnung drehfest mit dem Antriebslamellenträger 42 verbunden ist. Der erste Antriebsgliedabschnitt 76 ist in axialer Richtung zwischen einer Antriebslamelle 70a des Lamellenpaketes und einem Sicherungsring 78 angeordnet, der in axialer Richtung an dem Antriebslamellenträger bzw. Außenlamellenträger 42 festgelegt ist. Das Antriebsglied 40 weist radial innerhalb des ersten Antriebsgliedabschnittes 76 einen zweiten Antriebsgliedabschnitt 80 auf, der eine in der axialen Draufsicht ringförmige und im Längsschnitt bogenförmige Kontur besitzt, die an einer Antriebslamelle 70a des Lamellenpaketes anliegt. Über den Sicherungsring 78 und das Antriebsglied 40 wird das Lamellenpaket aus den Antriebslamellen 70 und den Abtriebslamellen 74 folglich in axialer Richtung abgestützt, wenn von dem ersten Kolben 62 eine Betätigungskraft auf das Lamellenpaket ausgeübt wird.

Ein dritter Antriebsgliedabschnitt 82 verbindet den zweiten Antriebsgliedabschnitt 80 mit der Eingangswelle 30.

Eine Besonderheit der Reibkupplungsanordnung 14 liegt darin, dass eine Lagestabilisierungseinrichtung vorgesehen ist, die auf der dem Sicherungsring 78 entgegengesetzten axialen Seite des Antriebsgliedes 40 angreift, um die Relativlage zwischen dem Außenlamellenträger 42 und dem Antriebsglied 40 zu stabilisieren. Die Lagestabilisierungseinrichtung ist in der Darstellung der Fig. 1 lediglich schematisch bei 84 angedeutet.

In den nachfolgenden Figuren sind weitere Ausführungsformen von Kupplungsanordnungen dargestellt, die hinsichtlich Aufbau und Funktionsweise generell der Kupplungsanordnung 14 der Fig. 1 entsprechen. Gleiche Elemente sind daher durch gleiche Bezugszeichen gekennzeichnet. Im Folgenden werden im Wesentlichen die Unterschiede erläutert.

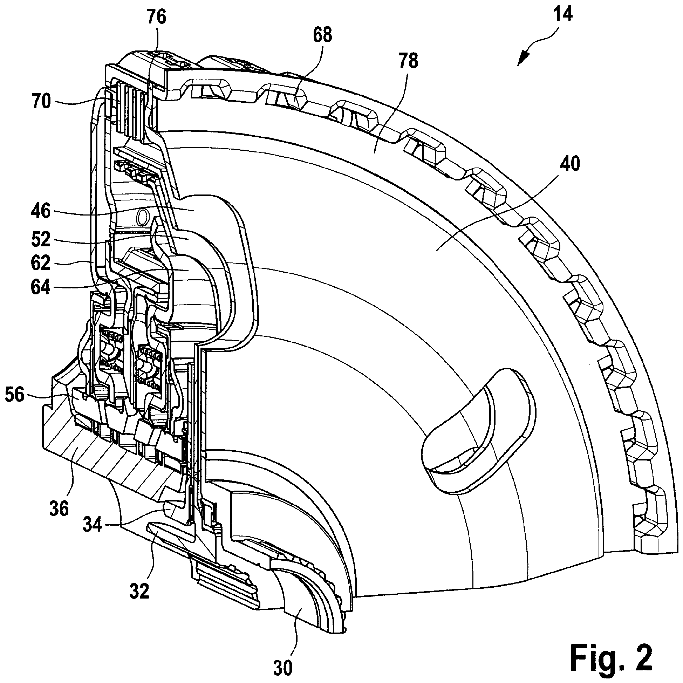

In den Fig. 2 bis 6 ist dabei eine Ausführungsform einer Reibkupplungsanordnung 14 gezeigt, bei der die Lagesicherungseinrichtung durch eine Mehrzahl von Axialsicherungshaken 86 gebildet ist, die an dem Sicherungsring 78 ausgebildet sind.

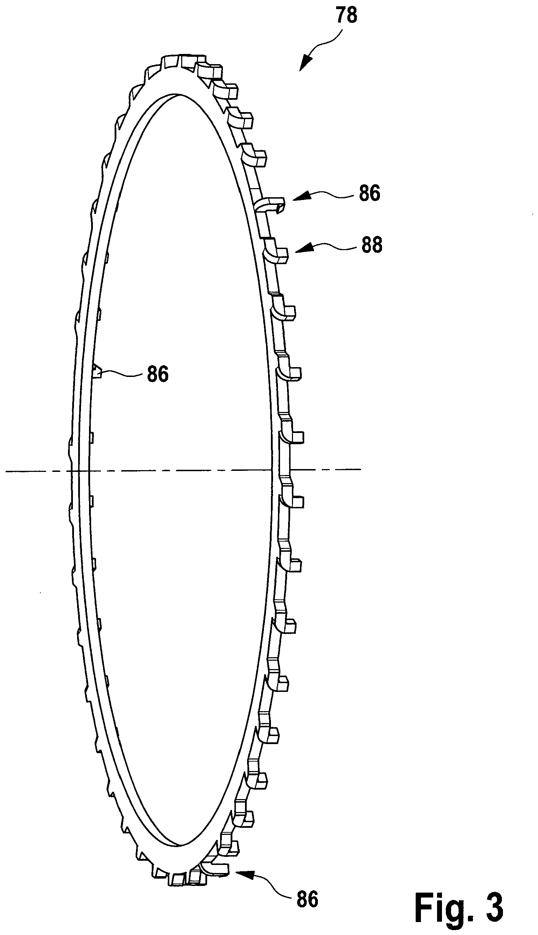

Der Sicherungsring 78 ist dabei in Fig. 3 dargestellt. Dieser weist über den Umfang verteilt vier Axialsicherungshaken 86 auf, die sich von dem Sicherungsring 78 in axialer Richtung erstrecken. Ferner ist im Bereich zwischen den Axialsicherungshaken 86 jeweils eine Mehrzahl von Tangentialsicherungsnasen 88 ausgebildet, die sich ebenfalls jeweils in axialer Richtung erstrecken. Die Tangentialsicherungsnasen 88 erzielen vorzugsweise eine radiale Verklemmung, so dass vorteilhafterweise kein Radialspiel mehr vorhanden ist. Dies hat den Vorteil, dass die Kupplungsanordnung weniger anfällig für aufgeprägte Schwingungen ist.

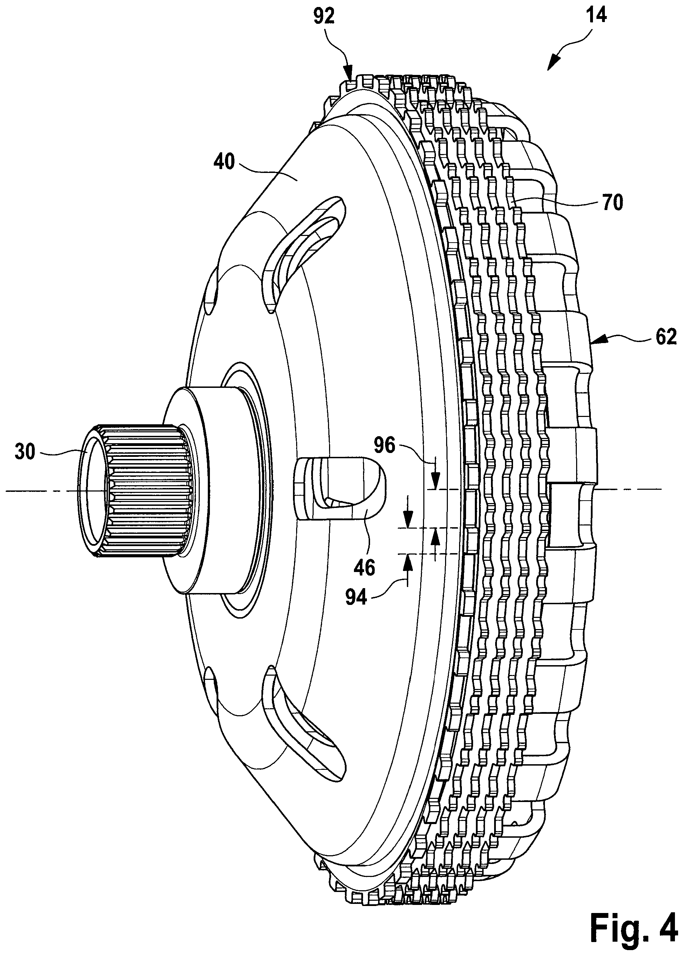

Fig. 4 zeigt die Reibkupplungsanordnung 14 ohne den Sicherungsring 78 und ohne Außenlamellenträger 42. Es ist zu erkennen, dass das Antriebsglied 40 eine Antriebsgliedverzahnung 92 aufweist, deren Zähne jeweils eine Zahnbreite 94 und deren Zahnlücken jeweils eine Zahnlückenbreite 96 besitzen. Die Zahnlückenbreite 96 ist dabei größer als die Zahnbreite 94. Die Zahnbreite 94 und die Zahnlückenbreite 96 sind in Umfangsrichtung gemessen.

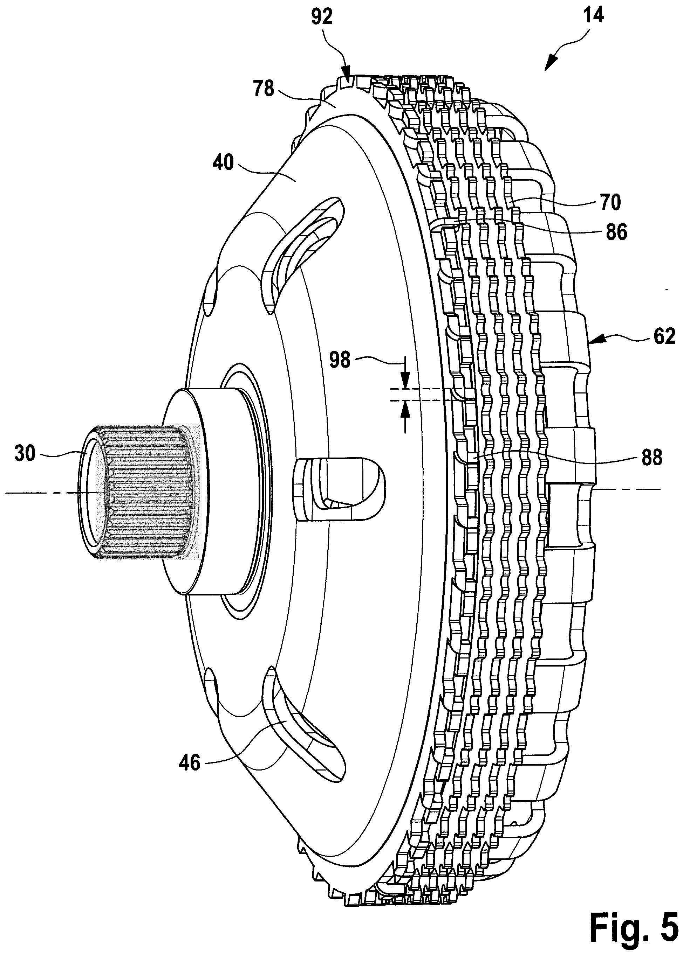

Fig. 5 zeigt eine der Fig. 4 vergleichbare Ansicht, wobei jedoch der Sicherungsring 78 mit dem Antriebsglied 40 verbunden ist. Dabei hintergreifen die Axialsicherungshaken 86 zugeordnete Zähne der Antriebsgliedverzahnung 92, derart, dass das Antriebsglied 40 und der Sicherungsring 78 in axialer Richtung fest miteinander verbunden sind.

Die Axialsicherungshaken 86 und die Tangentialsicherungsnasen 88 greifen dabei jeweils in axialer Richtung durch Zahnlücken der Antriebsgliedverzahnung 92 hindurch und liegen in Umfangsrichtung jeweils an einem Zahn der Antriebsgliedverzahnung 92 an. In Fig. 5 ist bei 98 eine Tangentialsicherungsnasenbreite dargestellt. Die Summe aus Tangentialsicherungsnasenbreite 98 und Zahnbreite 94 entspricht vorzugsweise der Zahnlückenbreite 96.

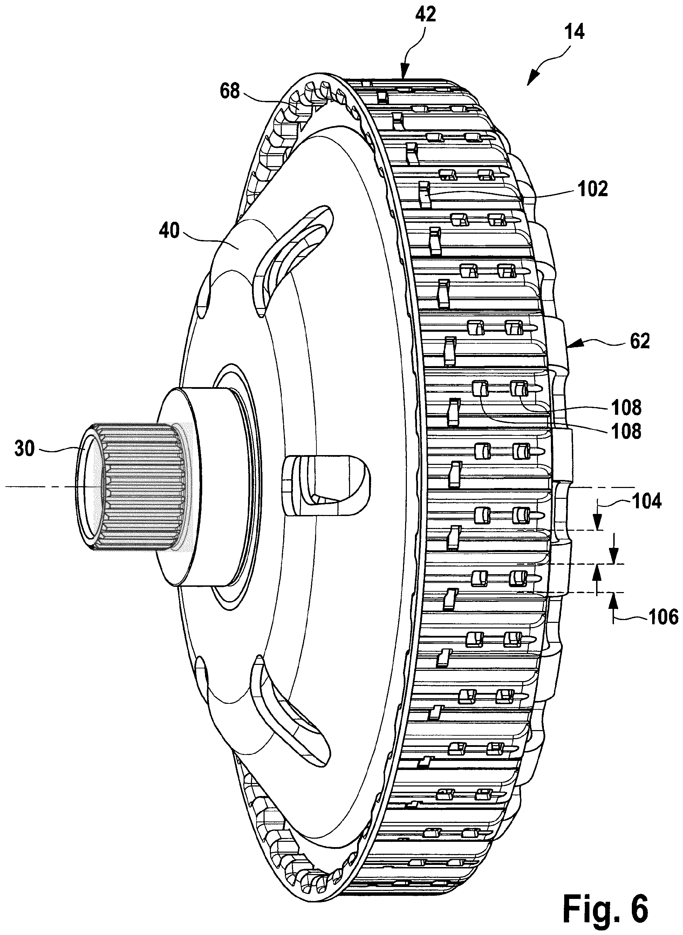

Fig. 6 zeigt eine der Fig. 5 vergleichbare Darstellung, wobei nun auch der Außenlamellenträger 42 zumindest teilweise dargestellt ist.

Der Außenlamellenträger 42 ist in Umfangsrichtung wellenförmig gebogen und bildet derart eine Außenlamellenträgerverzahnung 68, die mit der Antriebsgliedverzahnung 92 in Eingriff steht.

Fig. 6 zeigt dabei zunächst bei 102, dass der Außenlamellenträger 42 eine Mehrzahl von Sicherungsringausnehmungen 102 aufweist, in die der Sicherungsring 78 außenumfänglich greift. Ferner ist bei 104 die Zahnbreite 104 der Außenlamellenträgerverzahnung 68 dargestellt. Bei 106 ist die Zahnlückenbreite der Außenlamellenträgerverzahnung 68 dargestellt. Es ist zu erkennen, dass die Zahnbreite 104 gleich der Zahnlückenbreite 106 ist.

Die Zähne der Außenlamellenträgerverzahnung 68 greifen dabei in Zahnlücken der Antriebsgliedverzahnung 92.

Durch das Zusammenwirken zwischen der Außenlamellenträgerverzahnung 68 und der Antriebsgliedverzahnung 92 in Verbindung mit den Tangentialsicherungsnasen 88 wird ferner erreicht, dass das Antriebsglied 40 und der Sicherungsring 78 in Umfangsrichtung drehfest mit dem Antriebslamellenträger 42 verbunden sind.

Die Lagesicherungseinrichtung wird folglich bei dieser Ausführungsform dadurch gebildet, dass an dem Sicherungsring 78 wenigstens ein Axialsicherungshaken 86 ausgebildet ist, der den ersten Antriebsgliedabschnitt 76 des Antriebsgliedes 40 hintergreift, so dass der erste Antriebsgliedabschnitt 76 in axialer Richtung im eingebauten Zustand mittels des Sicherungsringes 78 in beiden axialen Richtungen von der Lage her gesichert ist, und zwar in Bezug auf den Außenlamellenträger 42.

In Fig. 6 ist ferner dargestellt, dass der Außenlamellenträger 42 im Bereich jeweiliger Zahnlücken eine Mehrzahl von Schmierfluidbohrungen bzw. -schlitzen 108 aufweist, über die radial von innen nach außen strömendes Schmier- und Kühlfluid abströmen kann.

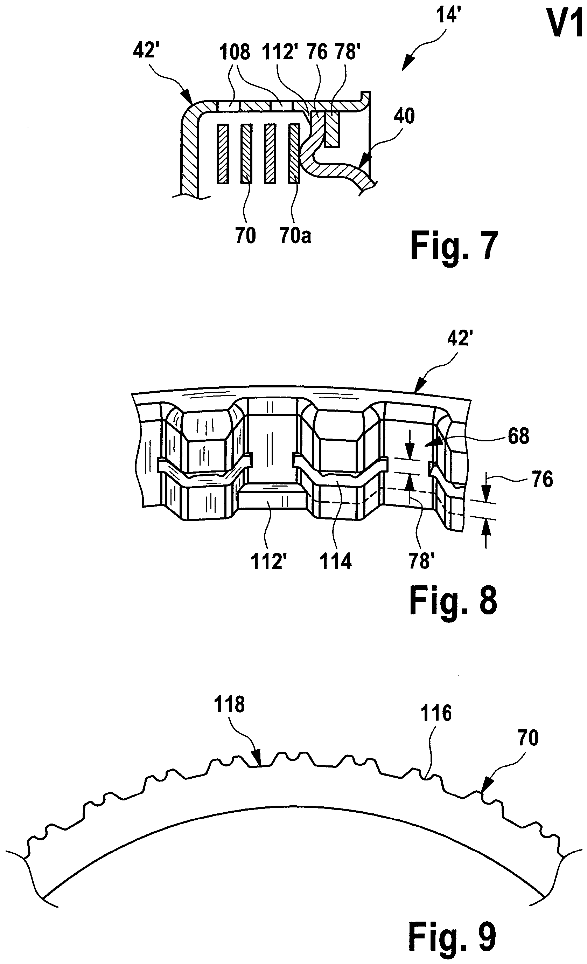

In den Fig. 7 bis 13 sind weitere Ausführungsformen von Kupplungsanordnungen gezeigt, die jeweils Lagestabilisierungseinrichtungen in Form von Vorsprüngen aufweisen, die einstückig mit dem Außenlamellenträger 42 ausgebildet sind.

In den Fig. 7 bis 9 ist eine Kupplungsanordnung 14' dargestellt, bei der am Innenumfang des Antriebslamellenträgers 42' Radialvorsprünge 112' ausgebildet sind, wobei der erste Antriebsgliedabschnitt 76 in axialer Richtung zwischen diesen Radialvorsprüngen 112' und dem Sicherungsring 78' angeordnet ist bzw. axial festgelegt ist. Der Sicherungsring 78' kann bei dieser und bei den nachfolgenden Ausführungsformen jeweils ein offener Ring sein, während der Sicherungsring 78 der Fig. 2 bis 6 vorzugsweise ein geschlossener Ring ist.

Wie es in Fig. 8 gezeigt ist, können die Vorsprünge 112' dabei als Radialnasen ausgebildet sein, die aus dem Material des Antriebslamellenträgers 42' durch Kaltverformung herausgedrückt sind, insbesondere im Bereich von Zahnlücken der Außenlamellenträgerverzahnung 68. In Fig. 8 ist ferner angedeutet, dass der Außenlamellenträger 42' im Bereich der Zähne der Antriebslamellenträgerverzahnung 68 Durchbrechungen 114 aufweist, in die der Sicherungsring 78' greifen kann. Zur besseren Identifizierung ist in Fig. 8 ferner schematisch dargestellt, dass der erste Antriebsgliedabschnitt 76 in axialer Richtung zwischen den Durchbrechungen 114 und den Radialvorsprüngen 112' angeordnet ist.

Die Radialvorsprünge 112' sind dabei nicht zwischen allen Zähnen der Antriebslamellenträgerverzahnung 68 ausgebildet, sondern lediglich zwischen einer geringen Anzahl hiervon, beispielsweise jeder fünften Zahnlücke. In Fig. 9 ist gezeigt, dass die Antriebslamellen 70 aus diesem Grund neben den Lamellenzähnen 116, die normalerweise in die Zahnlücken der Antriebslamellenträgerverzahnung 68 greifen, auch Zahnaussparungen aufweisen, damit die Antriebslamellen 70 in Bezug auf den Antriebslamellenträger 42' montierbar sind, und zwar durch axiales Einschieben in die Antriebslamellenträgerverzahnung 68.

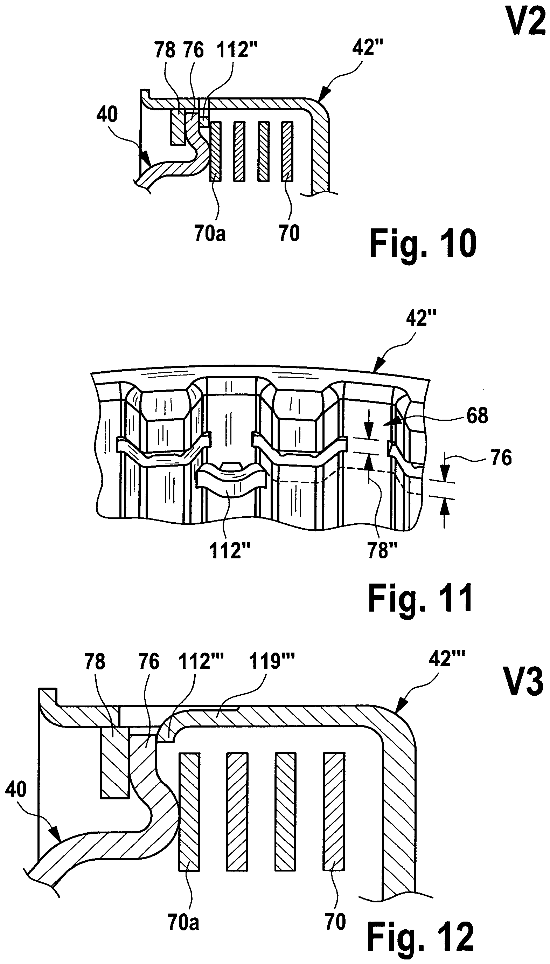

In den Fig. 10 und 11 ist eine weitere Ausführungsform eines Außenlamellenträgers 42" gezeigt, bei dem eine Lagestabilisierung durch radial nach innen im Bereich der Zahnlücken der Antriebslamellenträgerverzahnung 68 ausgeprägte Radialvorsprünge 112" gebildet ist.

In Fig. 12 ist ein Antriebslamellenträger 42'" gezeigt, bei dem durch axial und tangential verlaufende Einschnitte Zungen 119'" gebildet sind, die an ihren Enden abgebogen sind, um Radialvorsprünge 112'" zu bilden, an denen der erste Antriebsgliedabschnitt 76 anliegen kann.

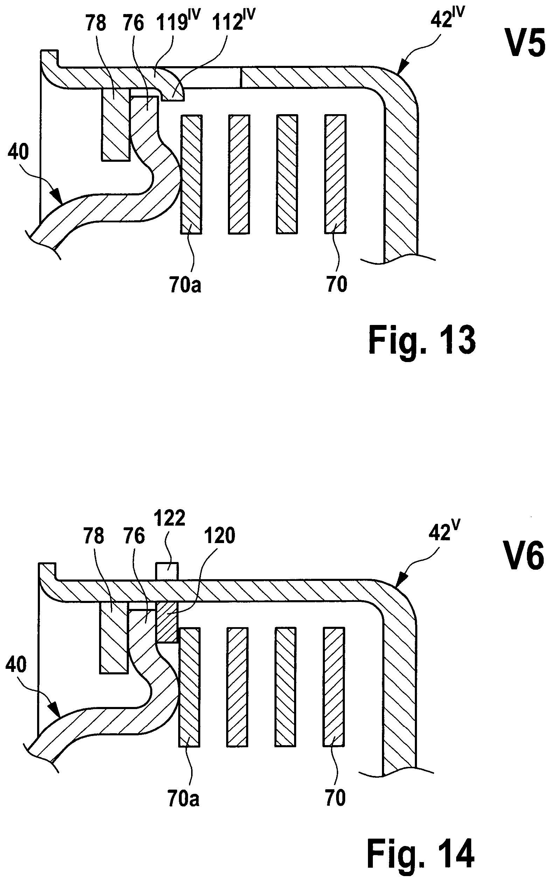

Fig. 12 zeigt dabei eine Zunge 119^{iv}, die sich hin zu dem Antriebsglied 40 erstrecken. Fig. 13 zeigt eine Alternative, bei der die Zungen sich in Richtung von dem Antriebsglied 40 weg erstrecken, wobei an den Enden der Zungen 119^{iv} jeweilige Radialvorsprünge 112^{iv} ausgebildet sind.

Fig. 14 schließlich zeigt einen Antriebslamellenträger 42^{v}, bei dem radial nach außen vorstehende Ausstülpungen 122 vorgesehen sind, in denen ein zweiter Sicherungsring 120 axial in Bezug auf den Antriebslamellenträger 42^{v} festgelegt werden kann, derart, dass der erste Antriebsgliedabschnitt 76 in axialer Richtung zwischen dem Sicherungsring 78 und dem zweiten Sicherungsring 120 lagefixiert bzw. lagestabilisiert ist.

## Patentansprüche

1. Kupplungsanordnung (14) für einen Kraftfahrzeugantriebsstrang (10), mit
- einem Antriebsglied (40), das mit einem Antriebsmotor (12) verbindbar ist,
- einem Antriebslamellenträger (42), der eine Antriebslamellenträgerverzahnung (68) aufweist und drehfest mit dem Antriebsglied (40) verbunden ist,
- einer Mehrzahl von Antriebslamellen (70), die drehfest mit dem Antriebslamellenträger (42) verbunden sind,
- einem Abtriebslamellenträger (44), der eine Abtriebslamellenträgerverzahnung (72) aufweist und drehfest mit einer Abtriebswelle (32) verbindbar ist, und
- einer Mehrzahl von Abtriebslamellen (74), die drehfest mit dem Abtriebslamellenträger (44) verbunden sind, wobei ein erster Antriebsgliedabschnitt (76) des Antriebsgliedes (40) in axialer Richtung zwischen einer ersten Antriebslamelle (70a) der Antriebslamellen und einem Sicherungsring (78) angeordnet ist, und
wobei eine Lagestabilisierungseinrichtung auf der dem Sicherungsring (78) entgegengesetzten Seite des Antriebsgliedes (40) angreift, um die Relativlage zwischen dem Antriebslamellenträger (42) und dem Antriebsglied (40) zu stabilisieren,
**dadurch gekennzeichnet, dass**
die Lagestabilisierungseinrichtung wenigstens einen Axialsicherungshaken (86) aufweist, der fest mit dem Sicherungsring (78) verbunden ist.

2. Kupplungsanordnung (14) für einen Kraftfahrzeugantriebsstrang (10) nach Anspruch 1
**dadurch gekennzeichnet, dass**
die Lagestabilisierungseinrichtung eine Mehrzahl von Vorsprüngen (112) aufweist, die an dem Antriebslamellenträger (42'; 42"; 42"'; 42iv) ausgebildet und über den Umfang des Antriebslamellenträgers (42'; 42"; 42"'; 42iv) verteilt angeordnet ist.

3. Kupplungsanordnung nach Anspruch 1, **dadurch gekennzeichnet, dass** das Antriebsglied (40) einen zweiten Antriebsgliedabschnitt (80) aufweist, gegen den die erste Antriebslamelle (70a) andrückbar ist, wenn die Antriebs- und die Abtriebslamellen (70, 74) zusammengedrückt werden.

4. Kupplungsanordnung nach einem der Ansprüche 1 bis 3, **dadurch gekennzeichnet, dass** eine Zahnbreite (94) einer Antriebsgliedverzahnung (92) in Umfangsrichtung verkürzt ist, wobei der Axialsicherungshaken (86) durch eine Zahnlücke der Antriebsgliedverzahnung (92) hindurch greift.

5. Kupplungsanordnung nach einem der Ansprüche 1 bis 4, **dadurch gekennzeichnet, dass** der Sicherungsring (78) ferner wenigstens eine Tangentialsicherungsnase (88) aufweist.

6. Kupplungsanordnung nach einem der Ansprüche 1 - 5, **dadurch gekennzeichnet, dass** der Sicherungsring (78) als geschlossener Ring ausgebildet ist.

7. Kupplungsanordnung nach Anspruch 2, **dadurch gekennzeichnet, dass** die Vorsprünge (112', 112", 112"', 112^{iv}) im Bereich von Zahnlücken oder im Bereich von Zähnen der Antriebslamellenträgerverzahnung (68) ausgebildet sind.

8. Kupplungsanordnung nach Anspruch 2 oder 7, **dadurch gekennzeichnet**, das die Vorsprünge (112', 112", 112'", 112^{iv}) jeweils durch eine Radialnase (112"'; 112^{iv}) gebildet sind, die an einer sich in Längsrichtung erstreckenden Zunge (119) ausgebildet ist, die durch Einschnitte in dem Antriebslamellenträger (42"'; 42^{iv}) ausgebildet ist.

9. Kupplungsanordnung nach Anspruch 2 oder 7, **dadurch gekennzeichnet, dass** die Vorsprünge (112', 112", 112'", 112^{iv}) jeweils durch eine geprägte Radialnase (112'; 112") gebildet sind, die durch Umformen von Material des Antriebslamellenträgers (42'; 42") hergestellt ist.

10. Kupplungsanordnung nach einem der Ansprüche 1 - 9, **dadurch gekennzeichnet, dass** die Kupplungsanordnung einen zweiten Sicherungsring (120) aufweist, der axial an dem Antriebslamellenträger (42<v>) festgelegt ist und der auf der dem ersten Sicherungsring (78) entgegengesetzten Seite an dem Antriebsglied (40) angreift

11. Kupplungsanordnung nach Anspruch 10, **dadurch gekennzeichnet, dass** der Antriebslamellenträger (42^{v}) im Bereich eines Zahnes der Antriebslamellenträgerverzahnung eine radial nach außen gerichtete Ausstülpung (122) aufweist, in die der zweite Sicherungsring (120) greift.

## Claims

1. Coupling assembly (14) for a motor vehicle drive train (10), with
- a drive member (40) which can be connected to a drive engine (12),
- a drive multiple disc carrier (42) which has a drive multiple disc carrier toothing system (68) and is connected fixedly to the drive member (40) so as to rotate with it,
- a plurality of drive discs (70) which are connected fixedly to the drive multiple disc carrier (42) so as to rotate with it,
- an output multiple disc carrier (44) which has an output multiple disc carrier toothing system (72) and is connected fixedly to an output shaft (32) so as to rotate with it, and
- a plurality of output discs (74) which are connected fixedly to the output multiple disc carrier (44) so as to rotate with it, a first drive member section (76) of the drive member (40) being arranged in the axial direction between a first drive disc (70a) of the drive discs and a securing ring (78), and
a positional stabilization device acting on that side of the output member (40) which is opposite the securing ring (78), in order to stabilize the relative position between the drive multiple disc carrier (42) and the drive member (40),
**characterized in that**
the positional stabilization device has at least one axial securing hook (86) which is connected fixedly to the securing ring (78).

2. Coupling assembly (14) for a motor vehicle drive train (10) according to Claim 1,
**characterized in that**
the positional stabilization device has a plurality of projections (112) which are configured on the drive multiple disc carrier (42'; 42"; 42"'; 42iv) and are arranged distributed over the circumference of the drive multiple disc carrier (42'; 42"; 42'"; 42iv).

3. Coupling assembly according to Claim 1, **characterized in that** the drive member (40) has a second drive member section (80), against which the first drive disc (70a) can be pressed when the drive discs and the output discs (70, 74) are pressed together.

4. Coupling assembly according to one of Claims 1 to 3, **characterized in that** a tooth width (94) of a drive member toothing system (92) is shortened in the circumferential direction, the axial securing hook (86) engaging through a tooth gap of the drive member toothing system (92).

5. Coupling assembly according to one of Claims 1 to 4, **characterized in that**, furthermore, the securing ring (78) has a tangential securing lug (88).

6. Coupling assembly according to one of Claims 1 to 5, **characterized in that** the securing ring (78) is configured as a closed ring.

7. Coupling assembly according to Claim 2, **characterized in that** the projections (112', 112", 112"', 112^{iv}) are configured in the region of tooth gaps or in the region of teeth of the drive multiple disc carrier toothing system (68).

8. Coupling assembly according to Claim 2 or 7, **characterized in that** the projections (112', 112", 112"', 112^{iv}) are formed in each case by way of a radial lug (112'"; 112^{iv}) which is configured on a tab (119) which extends in the longitudinal direction and is configured by way of notches in the drive multiple disc carrier (42'"; 42^{iv}).

9. Coupling assembly according to Claim 2 or 7, **characterized in that** the projections (112', 112", 112"', 112^{iv}) are formed in each case by way of a stamped radial lug (112'; 112") which is produced by way of reshaping of material of the drive multiple disc carrier (42'; 42").

10. Coupling assembly according to one of Claims 1 to 9, **characterized in that** the coupling assembly has a second securing ring (120) which is fixed axially on the drive multiple disc carrier (42<v>) and which acts on the drive member (40) on the side which is opposite the first securing ring (78).

11. Coupling assembly according to Claim 10, **characterized in that**, in the region of a tooth of the drive multiple disc carrier toothing system, the drive multiple disc carrier (42^{v}) has a radially outwardly directed protuberance (122), into which the second securing ring (120) engages.

## Revendications

1. Système d'embrayage (14) pour une chaîne cinématique de véhicule automobile (10), comprenant
- un organe d'entraînement (40) qui peut être connecté à un moteur d'entraînement (12),
- un support de disques d'entraînement (42) qui présente une denture de support de disques d'entraînement (68) et qui est connecté de manière solidaire en rotation à l'organe d'entraînement (40),
- une pluralité de disques d'entraînement (70) qui sont connectés de manière solidaire en rotation au support de disques d'entraînement (42),
- un support de disques de prise de force (44) qui présente une denture de support de disques de prise de force (72) et qui peut être connecté de manière solidaire en rotation à un arbre de prise de force (32), et
- une pluralité de disques de prise de force (74) qui sont connectés de manière solidaire en rotation au support de disques de prise de force (44),
une première portion d'organe d'entraînement (76) de l'organe d'entraînement (40) étant disposée dans la direction axiale entre un premier disque d'entraînement (70a) des disques d'entraînement et une bague de fixation (78), et
un dispositif de stabilisation de position s'engageant sur le côté de l'organe d'entraînement (40) opposé à la bague de fixation (78) afin de stabiliser la position relative entre le support de disques d'entraînement (42) et l'organe d'entraînement (40),
**caractérisé en ce que**
le dispositif de stabilisation de position présente au moins un crochet de fixation axiale (86) qui est connecté fixement à la bague de fixation (78).

2. Système d'embrayage (14) pour une chaîne cinématique de véhicule automobile (10) selon la revendication 1,
**caractérisé en ce que**
le dispositif de stabilisation de position présente une pluralité de saillies (112) qui sont réalisées au niveau du support de disques d'entraînement (42'; 42"; 42"' ; 42^{iv}) et qui sont réparties sur la périphérie du support de disques d'entraînement (42'; 42"; 42"' ; 42^{iv}).

3. Système d'embrayage selon la revendication 1, **caractérisé en ce que** l'organe d'entraînement (40) présente une deuxième portion d'organe d'entraînement (80) contre laquelle peut être pressé le premier disque d'entraînement (70a) lorsque les disques d'entraînement et de prise de force (70, 74) sont pressés les uns contre les autres.

4. Système d'embrayage selon l'une quelconque des revendications 1 à 3, **caractérisé en ce qu'**une largeur de dent (94) d'une denture d'organe d'entraînement (92) est raccourcie dans la direction périphérique, le crochet de fixation axiale (86) s'engageant à travers un espace entre dents de la denture d'organe d'entraînement (92).

5. Système d'embrayage selon l'une quelconque des revendications 1 à 4, **caractérisé en ce que** la bague de fixation (78) présente en outre au moins un ergot de fixation tangentielle (88).

6. Système d'embrayage selon l'une quelconque des revendications 1 à 5, **caractérisé en ce que** la bague de fixation (78) est réalisée sous forme de bague fermée.

7. Système d'embrayage selon la revendication 2, **caractérisé en ce que** les saillies (112', 112", 112"', 112^{iv}) sont réalisées dans la région d'espaces entre dents ou dans la région de dents de la denture de support de disques d'entraînement (68).

8. Système d'embrayage selon la revendication 2 ou 7, **caractérisé en ce que** les saillies (112', 112", 112"', 112^{iv}) sont à chaque fois formées par un ergot radial (112"' ; 112^{iv}) qui est réalisé au niveau d'une langue (119) s'étendant dans la direction longitudinale, laquelle est réalisée par des entailles dans le support de disques d'entraînement (42"' ; 42^{iv}).

9. Système d'embrayage selon la revendication 2 ou 7, **caractérisé en ce que** les saillies (112', 112", 112"', 112^{iv}) sont à chaque fois formées par un ergot radial en relief (112' ; 112") qui est fabriqué par façonnage du matériau du support de disques d'entraînement (42' ; 42").

10. Système d'embrayage selon l'une quelconque des revendications 1 à 9, **caractérisé en ce que** le système d'embrayage présente une deuxième bague de fixation (120) qui est fixée axialement au support de disques d'entraînement (42^{v}) et qui s'engage sur le côté opposé à la première bague de fixation (78) avec l'organe d'entraînement (40).

11. Système d'embrayage selon la revendication 10, **caractérisé en ce que** le support de disques d'entraînement (42^{v}) présente, dans la région d'une dent de la denture de support de disques d'entraînement, une protubérance orientée radialement vers l'extérieur (122) avec laquelle s'engage la deuxième bague de fixation (120).
